# EUROPEAN PATENT APPLICATION

(11) **EP 2 653 969 A1**
(43) Date of publication of application: **23.10.2013**
(21) Application number: 13164795.0
(22) Date of filing: 22.04.2013
(51) Int. Cl.: G06F 9/54

(54) **Excluding locations from location sharing**

(30) Priority: 20.04.2012 US 201213452149
(71) Applicant: Apple Inc., Cupertino, CA 95014 (US)
(72) Inventor: Sabatelli, Alessandro F., Cupertino, CA 95014 (US); Dickens, Joshua B., Cupertino, CA 95014 (US)
(74) Representative: Rooney, John-Paul

(57) **Abstract**

Techniques are disclosed that allow a programmable device (110) to suspend sharing the location of the device (110) automatically based upon predetermined criteria, such as a location, time of day, or an activity of the user of the device. Location sharing may be inhibited for some devices while remaining active for others. A server (130) may provide intermediary services, storing location history information in a database (140) for providing to devices registered (150) to receive the location information.

## Description

### BACKGROUND

This disclosure relates generally to the field of social networking. More particularly, but not by way of limitation, it relates to a technique for excluding a location from location sharing applications.

Personal connectivity applications now exist on smart phones and other devices such as tablet computers that share the location of the device and thus, generally, its owner or user. While location sharing can be useful, there are times or places where a person may not want to share the location of the device, without having to remember to disable location sharing manually.

### SUMMARY

According to a first aspect of the invention, there is provided a program storage device according to claim 1. According to a second aspect of the invention, there is provided a method according to claim 7. According to a third aspect of the invention, there is provided a device according to claim 12. According to a fourth aspect of the invention, there is provided a system according to claim 14.

Techniques are disclosed that allow a programmable device to suspend sharing the location of the device automatically based upon predetermined criteria, such as a location, time of day, or an activity of the user of the device. Location sharing may be inhibited for some devices while remaining active for others. A server may provide intermediary services, storing location history information in a database for providing to devices registered to receive the location information.

A program storage device is disclosed. The program storage device is readable by a processor embedded in a device and stores instructions that cause the processor to execute a personal connectivity application to broadcast location information of the device; and subsequently selectively inhibit broadcast of location information of the device based on a set of determinations, where the set of determinations includes one or more of a determination that the device is at a specified location, a determination that a specified time has occurred, and a determination that activity information for a user of the device meets user-specified conditions.

A method is disclosed. The method includes broadcasting location information associated with a programmable device; and inhibiting broadcasting of location information associated with the programmable device based on one or more of determinations. The determinations include a determination that the programmable device is in a predefined position relative to a spatial region, a determination that the programmable device is in a predefined position relative to another device, a determination that a current time is in a predefined relation to a specified temporal window, and a determination that a user of the programmable device is performing a user-specified activity.

A programmable device is disclosed. The programmable device includes a programmable control device; a receiver, coupled to the programmable control device, adapted to receive spatial location information; a storage device, coupled to the programmable control device; and software, stored on the storage device. The software includes instructions that when executed by the programmable control device, cause the programmable control device to perform actions that include broadcasting location information associated with a programmable device; and subsequently inhibiting broadcasting of location information associated with the programmable device responsive to a set of determinations. The set of determinations includes one or more of a determination that the programmable device is in a predefined position relative to a spatial region, a determination that the programmable device is in a predefined position relative to another device, a determination that a current time is in a predefined relation to a specified temporal window, and a determination that schedule data associated with a user of the programmable device is in a preconfigured relationship with a current time.

A system is disclosed. The system includes a first programmable device, adapted to generate location information associated with the first programmable device; a second programmable device; and a server, communicatively coupled to the first programmable device and the second programmable device. The server includes a processor; a storage device, coupled to the processor; a location history database, stored on the storage device; and software, stored on the storage device. The software includes instructions that when executed by the processor, cause the processor to perform actions that include receiving the location information from the first programmable device; storing the location information in the location history database; broadcasting the location information to the second programmable device; and suspending broadcasting the location information to the second programmable device responsive to a set of determinations. The set of determinations includes one or more of a determination that the first programmable device is in a predefined position relative to a spatial region, a determination that the programmable device is in a predefined position relative to the second programmable device, a determination that a current time is in a predefined relation to a specified temporal window, and a determination that schedule data associated with a user of the first programmable device is in a preconfigured relationship with a current time.

### BRIEF DESCRIPTION OF THE DRAWINGS

Figure 1 is a block diagram of a system for sharing location information that allows inhibiting location sharing.

Figure 2 is a flowchart illustrating a technique for determining whether to inhibit location sharing.

Figure 3 is a flowchart illustrating a technique for evaluating a rule used to determine whether to inhibit location sharing.

Figure 4 is a block diagram illustrating a programmable device configured for inhibiting location sharing.

Figure 5 is a block diagram illustrating an electronic device configured for assisting location sharing.

### DETAILED DESCRIPTION

In the following description, for purposes of explanation, numerous specific details are set forth in order to provide a thorough understanding of the invention. It will be apparent, however, to one skilled in the art that the invention may be practiced without these specific details. In other instances, structure and devices are shown in block diagram form in order to avoid obscuring the invention. References to numbers without subscripts or suffixes are understood to reference all instance of subscripts and suffixes corresponding to the referenced number. Moreover, the language used in this disclosure has been principally selected for readability and instructional purposes, and may not have been selected to delineate or circumscribe the inventive subject matter, resort to the claims being necessary to determine such inventive subject matter.

By allowing a device to suspend location sharing based on determinations such as location, time, and activities of a user of the device, a user may hide his or her location at times when location sharing may be undesirable. The device may decide when to suspend sharing its location based on the evaluation of rules defined by the user, so that the user need not manually turn off (and back on) the location sharing, thus making the suspension automatic. An intermediary server may assist by storing and re-broadcasting location history data.

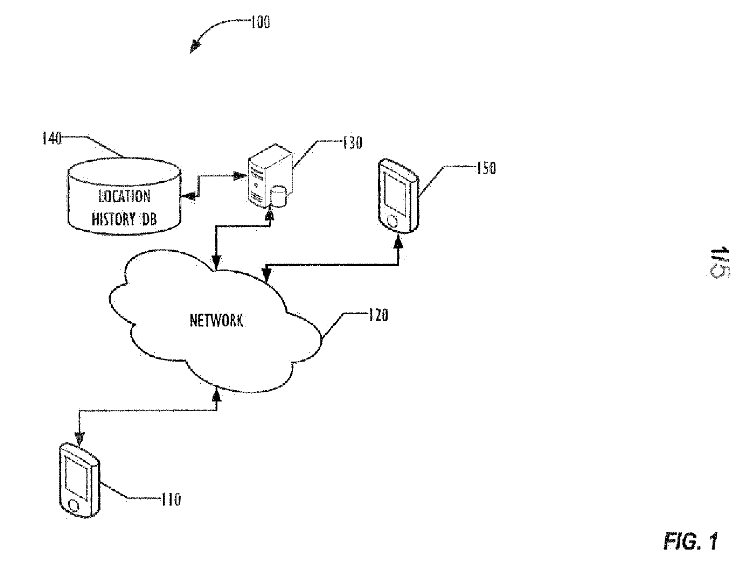

FIG. 1 is a block diagram illustrating a location sharing system 100 that allows sharing location information between two programmable devices 110 and 150. Programmable device 110 is configured to share its location with programmable device 150. Programmable device 150 may (but need not) also share its location with programmable device 110. Although only two programmable devices 110 and 150 are illustrated in FIG. 1 for clarity, each device 110, 150 may share its location with multiple other devices as configured by the user of the device 110, 150. Typically, only programmable devices that are registered for receiving location information from programmable device 110 are allowed to receive the location information.

As illustrated, programmable device 110 shares its location with programmable device 150 indirectly, by sending location information to server 130, which stores the location information in a location history database 140. When programmable device 150 wants to know the location of programmable device 110, programmable device 150 queries the server 130, which obtains the location information from the location history database 140 and provides the location information to programmable device 150. The designation of location history database 140 as a database should not be understood to imply any type of storage technique or format. Any desired storage technique and format of data storage may be used, including structured databases and simple text files. Although as indicated above the programmable device 150 may query the server 130 for the location information of programmable device 110, alternately, the server 130 may broadcast the location information to programmable device 150 and all other programmable devices registered to obtain location information for programmable device 110 instead of responding to an external request for the location information.

Programmable device 110 is connected to server 130 and programmable device 150 via network 120. Although only a single network is illustrated in FIG. 1 for clarity, network 120 may include multiple connected networks, of varying types, in which case programmable device 110, server 130, and programmable device 150 may each be connected to different ones of the multiple connected networks. The network 120 may be any type of network capable of transmitting and receiving data, including a mobile telephone network and data networks, such as a local area network, including a wireless (WiFi) network, or a wide area network such as the Internet. Programmable devices 110, 150 and server 130 may be connected to network 120 employing wired or wireless connections as desired.

Although only a single server 130 is illustrated in FIG. 1, any number of servers 130 may be employed. The servers 130 may be organized such that broadcasting the location information to one server causes the location information to be replicated to the other servers 130, or the programmable device 110 may broadcast the location information to the other servers 130 directly.

The discussion below is generally written in terms of a server-assisted system such as is illustrated in FIG. 1. Other implementations may be peer-to-peer instead of server-assisted, with any programmable device wanting to obtain the location of another device obtaining the location information directly from the other device via the network 120. In a peer-to-peer implementation the location information may be kept on and made available from the programmable device 110, instead of being sent to the server 130 for access by other devices.

The programmable device 110 broadcasts the location information in the sense that multiple recipients may receive the same location information. In the context of a server-assisted system such as is illustrated in FIG. 1, broadcasting the location information is performed by broadcasting the location information to the server 130, which then rebroadcasts the location information to registered receiving programmable devices, such as programmable device 150. In the context of a peer-to-peer system, broadcasting the location may be performed by transmitting the location information directly to any programmable device registered to receive the location information. In either type of system, the broadcasting may be initiated by the programmable device 110 or may be performed in response to a request for the location information by the server or programmable device 150. In a server-assisted system, in addition the re-broadcasting from the server 130 to the programmable device 150 may be initiated by the server 130 or may be performed in response to a request for the location information by the programmable device 150. Typically, the location information is broadcast (and re-broadcast) on a periodic basis at fixed intervals of time, although variants may specify a non-periodic broadcast schedule.

The server 130 may limit the amount of location information kept in the location history database 140. For example, the server 130 may keep only the most recent location information broadcast by programmable device 110, 150. In another example, the server 130 may keep location information for only a predetermined history period, such as the most recent two hours, discarding older location information. In yet another example, the server 130 may limit the stored size of the location information kept for any programmable device 110, 150, discarding older location information if new location information exceeds the predetermined size limit.

When the programmable device 110 selectively inhibits broadcasting of the location information, indicating to server 130 that location information for programmable device 110 is to be made inaccessible, the server 130 may either remove the location information for programmable device 110 from the location history database 140, so that there is no location information to re-broadcast, or alternately, preserve the location information in the location history database 140, but cease re-broadcasting the location information to the programmable device 150 to suspend sharing location information while inhibited. If the inhibition is removed, broadcasting the location information may resume.

In some variants, programmable device 110 may indicate to the server 130 that location information should be made inaccessible to some devices, but should remain accessible to other devices. For example, programmable device 110 may indicate that location history should be inaccessible to any device within a predefined proximity of programmable device 110. In such a situation, if programmable device 150 is within the defined proximity of programmable device 110, server 130 will not broadcast location information for programmable device 110 to programmable device 150, even though such location information may continue to be broadcast to other devices farther away, including programmable device 150, when it no longer is within the shielded proximity.

The server 130 may use the location of the requesting device to determine whether the requesting device is allowed to receive the location information of the programmable device 110. For example, programmable device 110 may indicate that location history should not be broadcast to any device within a defined proximity of programmable device 110. In such a situation, if programmable device 150 is within the defined proximity of programmable device 110, server 130 will not broadcast location information for programmable device 110 to programmable device 150, even though the server may continue to broadcast the location information to other devices farther away.

In a server-assisted implementation, the programmable device 110 may continue to broadcast location information to the server 130, letting the server 130 decide whether to re-broadcast the location information to programmable device 150. Alternately, the programmable device 110 may stop broadcasting location information to server 130 whenever the server 130 is not allowed to re-broadcast the location information, restarting location sharing with the server 130 when the server 130 is allowed to share the location information. If the programmable device 110 inhibits broadcasting location information to the server 130, some implementations may automatically discard any stored location information from the location history database 140. Other implementations may preserve location information in the location history database 140 for a predetermined staleness period, so that the server 130 may restart broadcasting the location information to programmable device 150 after the programmable device 110 and use the previously received location information, unless the stored location information is considered stale because it is older than the staleness period. The location information broadcast by the programmable device 110 (and re-broadcast by the server 110) may contain time information associated with the location information.

In some implementations, the server 130 may make decisions on whether to broadcast location information for programmable device 110 without interaction with the programmable device 110. In such an implementation, the server 130 maintains information sufficient to make a decision whether to broadcast the location information to the programmable device 150. Alternately, the server 130 may request assistance from the programmable device 110 on whether broadcast the location from programmable device 150, without storing information about the sharing criteria on the server 130. Other mixed responsibility configurations may be implemented.

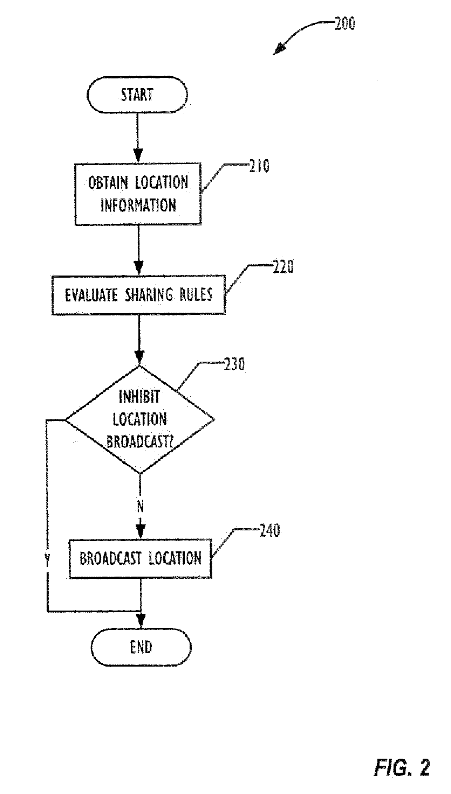

FIG. 2 is a flowchart illustrating a technique 200 for deciding whether to allow location sharing by broadcasting location information associated with the programmable device 110. In block 210, the location of the programmable device 110 is determined, using the location services described above. In block 220, one or more location sharing rules are evaluated by a rules engine. If the rules engine determines that location sharing is to be selectively inhibited, then in block 230 the broadcasting of the location information may be suspended. Otherwise, in block 240 the location of the programmable device 110 may be broadcast.

Rules and Rules Engine

Preferably, a decision on whether to broadcast location information of programmable device 110 may be made by evaluating one or more rules that define a set of determinations for the sharing criteria. Rule-based decision systems are known to the art, and any technique for storing and evaluating rules may be used for deciding whether to broadcast the location information. In general, a rules engine evaluates stored rules to decide whether to allow or inhibit broadcasting of the programmable device 110's location.

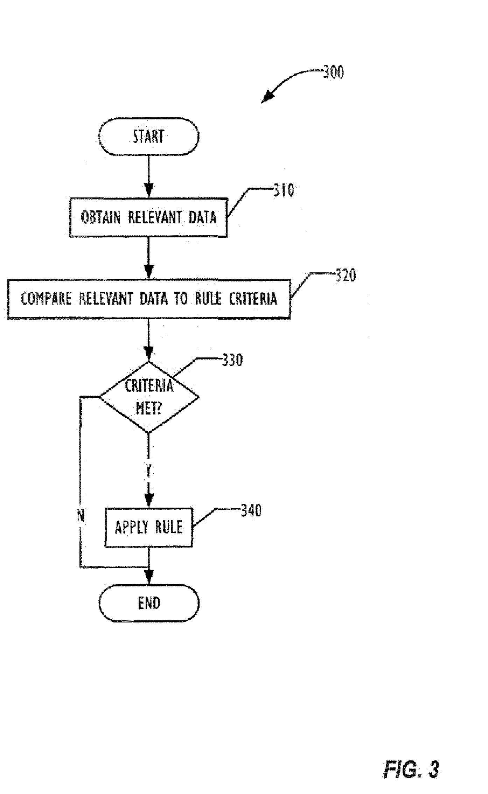

FIG. 3 is a flowchart illustrating a technique 300 for evaluating and applying rules. Where the technique 300 is performed by the programmable device 110, the rules typically are stored by the programmable device 110. Where the server 130 performs the technique 300, the rules typically are stored by the server 130 in a rules database, which may be a part of the location history database 140 or a separate database.

In block 310, data relevant to a rule is obtained. For rules involving time of day or dates, the current time and date is obtained. For rules involving the location of the programmable device 110, the current location of the programmable device 110 is obtained. For rules involving the location of another device, the current location of that device may be obtained, using either the current location of that other device in the location history database 140, or by requesting the current location of the other device if no location information for that device is available in the location history database 140. If the rules involve other locations or times, such as the location of named places or events, the location or timing of the other place or event may be obtained.

Once all of the relevant information has been obtained, then in block 320 the rule is evaluated by comparing the relevant data to the criteria defined by the rule. In block 330, if the criteria are met, then in block 340 the rule is applied, indicating the result of the rules evaluation. If the criteria are not met, the rule is not applied. Where multiple rules are available, the multiple rules are evaluated, using whatever Boolean operators are defined for their combination as necessary to produce a final result of the combined set of rules.

Where the programmable device 110 stops sending information to the server 130 when location information is not to be shared with other devices, the rules-based decision may be made by the programmable device 110, stopping or starting broadcasting location information to the server 130 as a result of the decision. Where the programmable device 110 continues to broadcast location information to the server 130, but the server 130 stops re-broadcasting the location information, the rules-based decision may be performed by the server 130, or the decision may be made by the server 130 requesting permission from the programmable device 110 to broadcast the location information to a specified programmable device 150.

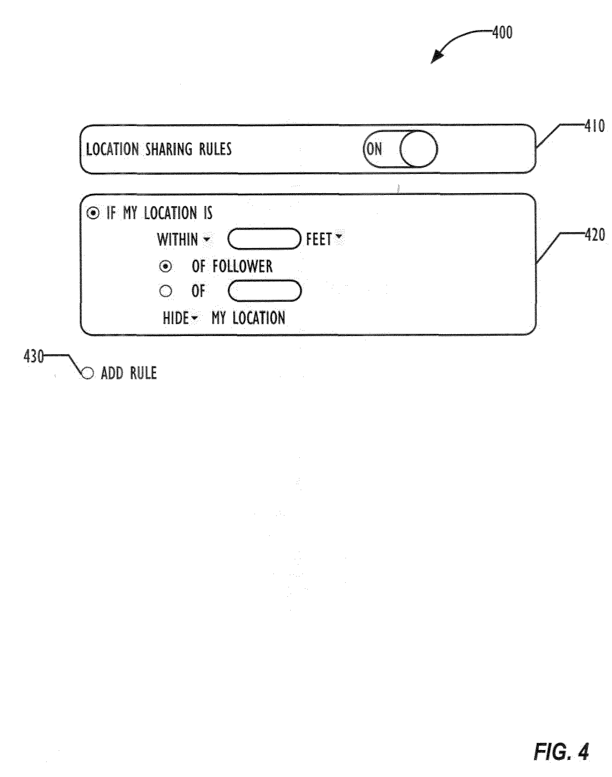

A user interface 400, such as is illustrated in FIG. 4, provides a way for a user of programmable device 110 to configure rules to control when location information of programmable device 110 may be shared. In the example of FIG. 4, location sharing rules may be turned on or off by element 410, and rules may be defined using user interface elements such as element 420. Additional rules may be added using user interface element 430. The user interface 400 is illustrative and by way of example only, and any desired type of user interface and user interface elements may be used as desired. The user interface may be a graphical user interface, such as illustrated in FIG. 4, allowing the user to enter rules criteria via a user input device such as a keyboard or pointers, or may employ a natural language voice-controlled interface that uses an agent such as the Apple Inc. Siri intelligent personal assistant application to obtain rule information and create one or more rules from the verbal rule information.

Types of Rules

In general, rules may be implemented that prohibit sharing the location of programmable device 110 if the rule conditions are met. Alternately, rules may be implemented where location sharing is prohibited unless the rule condition is met. If more than one rule is defined, the rules may be combined using Boolean logical constructs such as AND, OR, NOT, etc.

Many different types of rules may be provided. Rules may depend upon various criteria that may involve the programmable device 110, other programmable devices 150, or a combination of both. For example, one rule may indicate that location sharing is to be suspended when the programmable device is at a specified location, such as "at home." In another example, a rule may specify that location sharing is always allowed with any other programmable device except programmable device 150. In yet another example, a rule may specify that location sharing is to be suspended when programmable device 150 is within 30 feet of programmable device 110. Yet another type of rule may determine that activity information for a user of the programmable device 110 meets user-specified activity conditions, such as that the user is in a meeting.

Rules criteria may be based on specified spatial regions or times, using either explicit definitions of a spatial region or temporal windows (e.g., "within 30 feet of my current location," "between 8:00am and 5:00pm," "after 5:00pm today," or "before 7:00am") or may use predefined terms that can be evaluated (e.g., "during work hours" or "at home"). In addition, spatial regions may be defined in absolute or relative terms (e.g., "a 1 mile radius circle centered at 37.33182°N 122.03118°W" or "near me"). When using relative terms, such as "near me," the resolution of "near" may be based upon a system-defined default, which some systems may allow the user of the programmable device 110 to override by specifying a resolution. For proximity rules, spatial regions may be defined for the criteria, so that the proximity rule applies to all known other devices within the spatial region (e.g., "any devices near me)." Where specific locations are defined, the rules engine may apply a default or user-specified approximation calculation, so that two devices may be considered co-located if they are within the approximation calculation of each other.

Temporal windows may be single times (e.g., "8:01am") or windows that specify one or more of a start time and an end time (e.g., "after noon today" or "between 6pm and 10pm"). Temporal windows may include date information, and may span a period greater than a single day.

Similarly, predefined terms like "work hours" may employ standard definitions provided by the system or may employ user set definitions. The system may provide standard definitions of noteworthy places (e.g., "Las Vegas"), or may be capable of searching for a place name to determine the absolute location to use (e.g., "the nearest McDonald's"). Spatial regions may be defined using geometrical shapes, including both circular and non-circular shapes such as squares and other polygons, or may be defined as an arbitrary bounded region, with the user defining the shape explicitly. Spatial regions may be defined relative to the user (e.g., "within 20 feet of me") or may be defined relative to another location (e.g., "within 5 miles of my office.") Spatial regions typically are two-dimensional, but some implementations may allow 3-dimensional spatial regions (e.g., "within 20 foot of me" may define a 20-foot diameter sphere centered at the user's location.)

When evaluating location-based rules, the relevant location may be determined using location services that are provided by the operating system of the programmable device. Such location services may use one or more of information from a GPS receiver, triangulation from mobile telephone towers, and signal strength in a WiFi network to determine the location. Where locations are expressed as a relative region around a center point, the base or default size of the region may be based upon the population density of the area or other density calculations, such as the number of mobile telephone towers detected by the programmable device 110. For example a default "near me" region size in the District of Columbia may be much smaller than a "near me" region size in Alaska.

In some implementations, more complex criteria may be provided that involve determining a location or a time, then determining the relationship of the user to that location or time. For example, a rule may apply if the user is "on a train," "in New York City," or "at Wrigley Field." Similarly, a rule may apply "during Passover" or "while I'm on vacation" or "when I'm in a meeting." Rules may be context sensitive (e.g., "when I'm driving" or "while running"). These rules may require access to the user's calendar and contacts information, in addition to access to a reference source of information, such as a search engine, to evaluate the terms contained in the rule.

Rules may also make determinations based upon the performance of user-specified activities. These determinations may include evaluating schedule data associated with a user of the programmable device 110, such as calendar data, determining that the schedule data is in a preconfigured relationship to the current time. For example, a rule that specifies inhibiting broadcasting of location information if the user is in a meeting may review calendar data associated with the user to locate meetings, and evaluate as being in a meeting if the current time is within a temporal window specified for a meeting.

Rules may apply differently to different people or groups of people. For example, one rule may apply to John Doe, but a different rule may apply to Jane Roe. Groups may be defined, by using address book groups or otherwise, and rules applied to members of the group. For example, one rule may apply to members of a user's family while another rule might apply to anyone not in the family.

The rules engine and rules may be specific to location sharing restriction or may be shared with other applications, such as communications restrictions that, for example, use the rules to prohibit receipt of text messages if the user is at a location or during a certain time.

Rules may be defined using any relative positioning desired by the user, allowing a rule to determine that the programmable device 110 (or the other device 150) is in a predefined relation to a spatial region (e.g., "outside of a 30 foot circle"), a predefined relation to a location of another device or person (e.g., "within 30 feet of Jane Doe"), or a predefined relation temporal window (e.g., "anytime except 9am to 5pm"). In addition, the predefined relation may be that the programmable device is arriving at or leaving a spatial region (e.g., "start hiding my location when I leave work," "start hiding my location when I arrive in Las Vegas," "stop hiding my location when I leave Las Vegas") or is starting or ending an activity, an event, or a temporal window (e.g., "start hiding my location when my appointment with Dr. Smith starts," "stop hiding my location when my meeting finishes," "start hiding my location at 5:00pm today").

The implementation of natural language rules-based engines is known in the art and need not be described in any detail herein.

Implementation in an Electronic Device

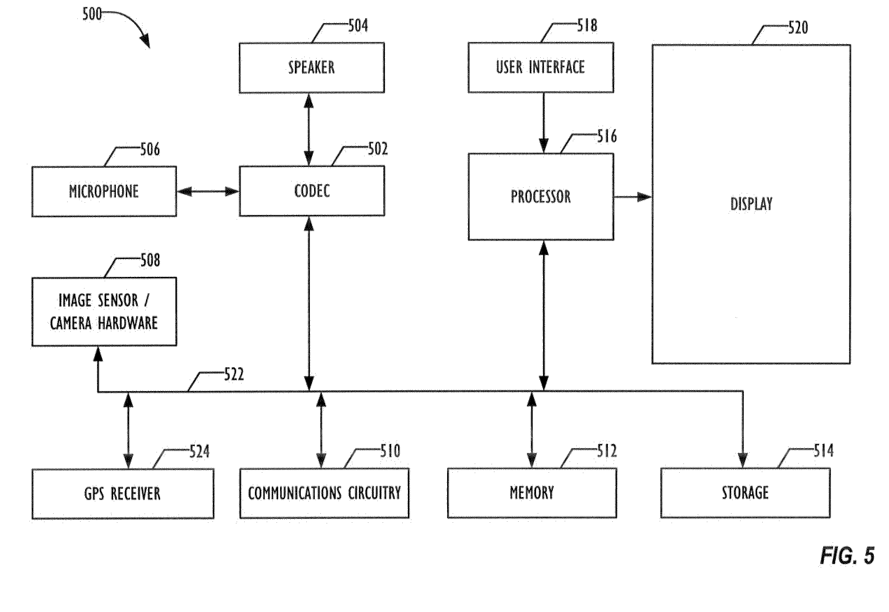

FIG. 5 is a simplified functional block diagram illustrating an electronic device 500 according to one embodiment that can implement the techniques described above. The electronic device 500 may include a processor 516, display 520, microphone 506, audio/video codecs 502, speaker 504, communications circuitry 510, an image sensor with associated camera hardware 508 for performing image capture, user interface 518, memory 512, storage device 514, and communications bus 522. Processor 516 may be any suitable programmable control device and may control the operation of many functions, such as the generation and/or processing of image data, as well as other functions performed by electronic device 500. Processor 516 may drive display 520 and may receive user inputs from the user interface 518. An embedded processor provides a versatile and robust programmable control device that may be utilized for carrying out the disclosed techniques. A Global Positioning System (GPS) receiver 524 receives information about the spatial location of the programmable device 500, providing the spatial location information to the processor 516. The communications circuitry 510 may provide connectivity to a mobile telephone network, in addition to data network connectivity, and may also provide spatial location information from the mobile telephone network, such as the spatial location of a nearest mobile telephone network tower. Although referred to as a GPS receiver 524, the receiver is not limited to the United States GPS system, but may be configured to work with any satellite navigation system as desired.

Storage device 514 may store media (e.g., image and video files), software (e.g., for implementing various functions on device 500), preference information, device profile information, and any other suitable data. Storage device 514 may include one more storage mediums for tangibly recording image data and program instructions, including for example, a hard-drive, permanent memory such as ROM, semi-permanent memory such as RAM, or cache. Program instructions may comprise a software implementation encoded in any desired language (e.g., C or C++).

Memory 512 may include one or more different types of memory which may be used for performing device functions. For example, memory 512 may include cache, ROM, and/or RAM. Communications bus 522 may provide a data transfer path for transferring data to, from, or between at least storage device 514, memory 512, and processor 516. Although referred to as a bus, communications bus 522 is not limited to any specific data transfer technology. User interface 518 may allow a user to interact with the electronic device 500. For example, the user interface 518 can take a variety of forms, such as a button, keypad, dial, a click wheel, or a touch screen.

In one embodiment, the electronic device 500 may be an electronic device capable of processing and displaying media, such as image and video files. For example, the electronic device 500 may be a device such as a mobile phone, personal data assistant (PDA), portable music player, monitor, television, laptop, desktop, and tablet computer, or other suitable personal device.

It is to be understood that the above description is intended to be illustrative, and not restrictive. For example, the above-described embodiments may be used in combination with each other. Many other embodiments will be apparent to those of skill in the art upon reviewing the above description. The scope of the invention therefore should be determined with reference to the appended claims, along with the full scope of equivalents to which such claims are entitled.

### Additional Statements

In a further embodiment of the invention, a program storage device, readable by a processor embedded in a device, comprises instructions stored thereon to cause the processor to execute a personal connectivity application to: broadcast location information of the device; and subsequently selectively inhibit broadcast of location information of the device based on a set of determinations, comprising one or more of: a determination that the device is at a specified location, a determination that a specified time has occurred, and a determination that activity information for a user of the device meets user-specified conditions.

The instructions to cause the processor to broadcast location information of the device may comprise instructions to cause the processor to broadcast the location information in response to receiving an external request for the location information.

The instructions to cause the processor to broadcast location information of the device may comprise instructions to cause the processor to broadcast the location information on a specified schedule.

The instructions to cause the processor to broadcast location information on a specified schedule may comprise instructions to cause the processor to broadcast the location information on a fixed interval of time schedule.

The instructions to cause the processor to broadcast location information on a specified schedule may comprise instructions to cause the processor to broadcast the location information when it is determined that the device is at a specified location.

The instructions to cause the processor to broadcast location information when it is determined that the device is at a specified location may comprise instructions to cause the processor to broadcast the location information when the specified location comprises a specified spatial region.

The instructions to cause the processor to broadcast location information of the device may comprise instructions to cause the processor to broadcast the location information by way of a mobile communication network.

The instructions to cause the processor to broadcast location information of the device may comprise instructions to cause the processor to broadcast the location information by way of a data network.

The instructions to cause the processor to broadcast location information may comprise instructions to cause the processor to request a component in the device, other than the processor, to broadcast the location information.

The instructions to cause the processor to selectively inhibit broadcast of location information based on a determination that the device is at a specified location, may comprise instructions to inhibit broadcast of location information when a determination is made that the device is within a specified spatial region.

The instructions to cause the processor to selectively inhibit broadcast of location information based on a determination that activity information for a user of the device meets user-specified conditions, may comprise instructions to inhibit broadcast of location information when a determination is made that schedule data for the user coincides with a current time.

The schedule data may comprise calendar data indicating a scheduled meeting from a start-time to an end-time, wherein a determination is made that a current time is within a temporal window defined by the start-time and the end-time.

The instructions to cause the processor to selectively inhibit broadcast of location information based on a determination that the device is at a specified location, may comprise instructions to inhibit broadcast of location information when a determination is made that the device is co-located with one or more other known devices.

The instructions to inhibit broadcast of location information when a determination is made that the device is co-located with one or more other known devices, may comprise instructions to determine that the device and the one or more other known devices are within a spatial region concurrently.

In a further embodiment of the invention, a method, comprises: broadcasting location information associated with a programmable device; and inhibiting broadcasting of location information associated with the programmable device responsive to one or more of: a determination that the programmable device is in a predefined relation to a spatial region, a determination that the programmable device is in a predefined relation to another device, a determination that a current time is in a predefined relation to a specified temporal window, and a determination that a user of the programmable device is performing a user-specified activity.

The act of broadcasting location information associated with the programmable device may comprise: broadcasting the location information in response to receiving an external request for the location information.

The act of broadcasting location information associated with the programmable device may be performed on a specified schedule.

The act of inhibiting broadcasting of location information associated with the programmable device may comprise: evaluating a rule defined by a user of the programmable device; and inhibiting broadcasting of location information responsive to evaluating the rule.

The act of inhibiting broadcasting of location information responsive to evaluating the rule may comprise: allowing broadcasting of location information only if evaluating the rule determines that one or more criteria of the rule are met.

The determination that a user of the device is performing a user-specified activity may comprise: a determination that schedule data for the user is in a preconfigured relationship with a current time.

The spatial region may comprise: a spatial region relative to a predefined location, the spatial region sized responsive to a density calculation.

In a further embodiment of the invention, a programmable device, comprises: a programmable control device; a receiver, coupled to the programmable control device, adapted to receive spatial location information; a storage device, coupled to the programmable control device; and software, stored on the storage device, comprising instructions that when executed by the programmable control device, cause the programmable control device to perform actions, comprising: broadcasting location information associated with a programmable device; and subsequently inhibiting broadcasting of location information associated with the programmable device responsive to a set of determinations that may comprise one or more of: a determination that the programmable device is in a predefined relation with a spatial region, a determination that the programmable device is in a predefined position relative to another device, a determination that a current time is in a predefined relation to a specified temporal window, and a determination that schedule data associated with a user of the programmable device is in a preconfigured relationship with a current time.

The act of broadcasting location information associated with a programmable device may be performed periodically.

The act of inhibiting broadcasting of location information associated with the programmable device may comprise: evaluating a rule defined by a user of the programmable device; and allowing broadcasting of location information unless evaluating the rule determines that one or more criteria are met.

The spatial region may comprise: a non-circular spatial region.

In a further embodiment of the invention, a system comprises: a first programmable device, adapted to generate location information associated with the first programmable device; a second programmable device; and a server, communicatively coupled to the first programmable device and the second programmable device, comprising: a processor; a storage device, coupled to the processor; a location history database, stored on the storage device; and software, stored on the storage device, comprising instructions that when executed by the processor, cause the processor to perform actions comprising: receiving the location information from the first programmable device; storing the location information in the location history database; broadcasting the location information to the second programmable device; and suspending broadcasting the location information to the second programmable device responsive to a set of determinations, that may comprise one or more of: a determination that the first programmable device is in a predefined relation to a spatial region, a determination that the programmable device is in a predefined relation to the second programmable device, a determination that a current time is in a predefined relation to a specified temporal window, and a determination that schedule data associated with a user of the first programmable device is in a preconfigured relationship with a current time.

The software may further comprise instructions that when executed by the processor, cause the processor to perform actions comprising: deleting the location information from the location history database upon performing the act of suspending broadcasting the location information.

The software may comprise: a rules engine, adapted to evaluate rules associated with the set of determinations, wherein the act of suspending broadcasting is performed responsive to evaluation of rules by the rules engine.

## Claims

1. A program storage device, readable by a processor embedded in a device (110), comprising instructions stored thereon to cause the processor to execute a personal connectivity application to:
broadcast location information of the device (110); and subsequently selectively inhibit broadcast of location information of the device (110) based on a set of determinations, comprising one or more of:
a determination that the device (110) is at a specified location,
a determination that a specified time has occurred, and
a determination that activity information for a user of the device (110) meets user-specified conditions.

2. The program storage device of claim 1, wherein the instructions to cause the processor to broadcast location information of the device (110) comprise either:
instructions to cause the processor to broadcast the location information in response to receiving an external request for the location information; or
instructions to cause the processor to broadcast the location information on a specified schedule; and optionally wherein
the instructions to cause the processor to broadcast location information on a specified schedule comprise instructions to cause the processor to broadcast the location information on a fixed interval of time schedule, or
instructions to cause the processor to broadcast the location information when it is determined that the device (110) is at a specified location.

3. The program storage device of claims 1 or 2, wherein the instructions to cause the processor to broadcast location information when it is determined that the device (110) is at a specified location comprise instructions to cause the processor to broadcast the location information when the specified location comprises a specified spatial region.

4. The program storage device of claims 1 to 3, wherein the instructions to cause the processor to broadcast location information of the device (110) comprise one of:
instructions to cause the processor to broadcast the location information by way of a mobile communication network; or
instructions to cause the processor to broadcast the location information by way of a data network; or
instructions to cause the processor to request a component in the device (110), other than the processor, to broadcast the location information.

5. The program storage device of claims 1 to 4, wherein the instructions to cause the processor to selectively inhibit broadcast of location information based on a determination that the device is at a specified location, comprise either:
instructions to inhibit broadcast of location information when a determination is made that the device is within a specified spatial region; or
instructions to inhibit broadcast of location information when a determination is made that the device (110) is co-located with one or more other known devices; and optionally wherein the instructions to inhibit broadcast of location information when a determination is made that the device (110) is co-located with one or more other known devices, comprise instructions to determine that the device (110) and the one or more other known devices are within a spatial region concurrently.

6. The program storage device of any preceding claim, wherein the instructions to cause the processor to selectively inhibit broadcast of location information based on a determination that activity information for a user of the device meets user-specified conditions, comprise instructions to inhibit broadcast of location information when a determination is made that schedule data for the user coincides with a current time; and optionally
wherein the schedule data comprises calendar data indicating a scheduled meeting from a start-time to an end-time, wherein a determination is made that a current time is within a temporal window defined by the start-time and the end-time.

7. A method, comprising:
broadcasting location information associated with a programmable device (110); and
inhibiting broadcasting of location information associated with the programmable device (110) responsive to one or more of:
a determination that the programmable device (110) is in a predefined relation to a spatial region,
a determination that the programmable device (110) is in a predefined relation to another device,
a determination that a current time is in a predefined relation to a specified temporal window, and
a determination that a user of the programmable device (110) is performing a user-specified activity.

8. The method of claim 7, wherein the act of broadcasting location information associated with the programmable device either comprises:
broadcasting the location information in response to receiving an external request for the location information; or
broadcasting the location information is performed on a specified schedule.

9. The method of claims 7 or 8, wherein the act of inhibiting broadcasting of location information associated with the programmable device (110) comprises:
evaluating a rule defined by a user of the programmable device (110); and
inhibiting broadcasting of location information responsive to evaluating the rule; and optionally allowing broadcasting of location information only if evaluating the rule determines that one or more criteria of the rule are met.

10. The method of claims 7 to 9, wherein the determination that a user of the device (110) is performing a user-specified activity comprises:
a determination that schedule data for the user is in a preconfigured relationship with a current time.

11. The method of claims 7 to 10, wherein the spatial region comprises:
a spatial region relative to a predefined location, the spatial region sized responsive to a density calculation.

12. A programmable device (110), comprising:
a programmable control device;
a receiver, coupled to the programmable control device, adapted to receive spatial location information;
a storage device, coupled to the programmable control device; and
software, stored on the storage device, comprising instructions that when executed by the programmable control device, cause the programmable control device to perform actions, comprising:
broadcasting location information associated with a programmable device (110); and subsequently
inhibiting broadcasting of location information associated with the programmable device (110) responsive to a set of determinations comprising one or more of:
a determination that the programmable device (110) is in a predefined relation with a spatial region,
a determination that the programmable device (110) is in a predefined position relative to another device (150),
a determination that a current time is in a predefined relation to a specified temporal window, and
a determination that schedule data associated with a user of the programmable device (110) is in a preconfigured relationship with a current time.

13. The programmable device (110) of claim 12, wherein the act of inhibiting broadcasting of location information associated with the programmable device (110) comprises:
evaluating a rule defined by a user of the programmable device (110); and
allowing broadcasting of location information unless evaluating the rule determines that one or more criteria are met.

14. A system (100), comprising:
a first programmable device (110), adapted to generate location information associated with the first programmable device (110);
a second programmable device (150); and
a server (130), communicatively coupled to the first programmable device and the second programmable device (150), comprising:
a processor;
a storage device, coupled to the processor;
a location history database (140), stored on the storage device; and
software, stored on the storage device, comprising instructions that when executed by the processor, cause the processor to perform actions comprising:
receiving the location information from the first programmable device (110);
storing the location information in the location history database (140);
broadcasting the location information to the second programmable device (150); and
suspending broadcasting the location information to the second programmable device (150) responsive to a set of determinations, comprising one or more of:
a determination that the first programmable device (110) is in a predefined relation to a spatial region,
a determination that the programmable device (110) is in a predefined relation to the second programmable device (150),
a determination that a current time is in a predefined relation to a specified temporal window, and
a determination that schedule data associated with a user of the first programmable device is in a preconfigured relationship with a current time.

15. The system of claim 14, wherein the software further comprises instructions that when executed by the processor, cause the processor to perform actions comprising:
deleting the location information from the location history database (140) upon performing the act of suspending broadcasting the location information.
